# EUROPÄISCHE PATENTSCHRIFT

(11) **EP 0 358 138 B1**
(45) Veröffentlichungstag und Bekanntmachung des Hinweises auf die Patenterteilung: **12.01.1994**
(21) Anmeldenummer: 89116270.3
(22) Anmeldetag: 04.09.1989
(51) Int. Cl.: F02C 9/28

(54) **Verfahren und Anordnung zur Regelung der Brennstoffzufuhr einer Gasturbine**
Process and arrangement for controlling fuel supply of a gas turbine
Procédé et arrangement pour commander l'alimentation en combustible d'une turbine à gaz

(30) Priorität: 09.09.1988 DE 3830804
(43) Veröffentlichungstag der Anmeldung: 14.03.1990
(73) Patentinhaber: MTU MOTOREN- UND TURBINEN-UNION MÜNCHEN GMBH, D-80976 München (DE)
(72) Erfinder: Schwamm, Friedrich, D-8011 Zorneding (DE)

(56) Entgegenhaltungen:
- EP-A- 0 063 999
- GB-A- 2 121 986
- US-A- 4 217 867
- US-A- 4 423 594
- US-A- 4 490 791

## Beschreibung

Die Erfindung betrifft ein Verfahren und eine Anordnung zur Regelung der Brennstoffzufuhr einer Gasturbine gemäß dem Oberbegriff des Patentanspruchs 1 oder 10.

Ein solches Verfahren ist aus der britischen Patentanmeldung GB 21 21 986 bekanntgeworden. Bei der Brennstoffregelung nach der vorgenannten Druckschrift wird zur Begrenzung eines Beschleunigungssignals u. a. auch der Wert einer Triebwerkstemperatur herangezogen.

Es ist bekannt, die Brennstoffzufuhr von Gasturbinen in Abhängigkeit einer Anzahl Zustandsparameter zu regeln. Als Regelgrößen kommen dafür Drücke, Temperaturen und Wellendrehzahlen der Gasturbine in Frage. Ein kritischer Parameter bei der Gasturbinenregelung ist das Einhalten gewisser Maximaltemperaturen, deren Überschreiten eine Schädigung der betroffenen Bauteile bedeuten würde. Daher wird als einer der Regelgrößen die Turbinentemperatur, insbesondere die Temperatur der Hochdruckturbine verwendet, da diese Temperatur bei Vollast des Triebwerkes eher nahe an der durch die Werkstoffdaten vorgegebenen Maximaltemperatur gewählt wird, um einen möglichst guten Wirkungsgrad und eine hohe Leistung des Triebwerkes zu erzielen.

Bei der Regelung der Brennstoffzufuhr von Fluggasturbinen tritt der Nachteil auf, daß bei der Beschleunigung von einer niedrigeren Drehzahl auf Vollast abhängig vom Startpunkt der Beschleunigung, d. h. von der Anfangswellendrehzahl, ein unterschiedliches Betriebsverhalten auftritt. Je niedriger die Triebwerksdrehzahl vor Beschleunigung ist, umso stärker ist ein Überschwinger, der Turbinentemperatur über den zulässigen Grenzwert. Derartige Überschwinger sollen jedoch vermieden werden, bzw. nur geringe Werte annehmen. Werden andererseits die Regelparameter so auf diese Gegebenheit abgestimmt, daß die Überschwinger minimiert sind, so tritt bei Beschleunigung aus dem Teillastbereich heraus ein Kriecheffekt auf. D. h. die Wellendrehzahl nähert sich nur mit Verzögerung dem Sollwert, wodurch insgesamt eine langsamere Beschleunigung und ein späteres Auftreten der Triebwerksvollast die Folge ist. Wird jedoch der Regelkreis auf eine schnellstmögliche Beschleunigung aus dem Teillastbereich heraus eingestellt, so wären die Überschwinger bei Beschleunigung aus der Leerlaufdrehzahl unzulässig hoch.

Es muß daher bei den bekannten Regelanordnungen immer ein Kompromiß zwischen diesen beiden Extremen gefunden werden, was einerseits dazu führt, daß bei Beschleunigung aus dem Teillastbereich eine unnötig hohe Zeit vergeht, bis die volle Schubkraft zur Verfügung steht, andererseits bei Beschleunigung aus dem Leerlauf heraus gewisse Überschwinger der Turbinentemperatur nicht zu vermeiden sind. Letzteres fürht dazu, daß der Turbinentemperatur-Grenzwert unterhalb des aus thermodynamischen Gründen zulässigen Grenzwertes gewählt werden muß, um eine Beschadigung der thermisch hoch beanspruchten Bauteile zu vermeiden.

In der EP-A 63 999 ist ein Gasturbinenregler offenbart, bei dem die Turbinentemperatur und eine Wellendrehzahl als Regelgrößen verwendet werden. Ein Nachteil dieser Anordnung besteht darin, daß das Hochfahren des Triebwerkes relativ langsam vonstatten geht, da keine beschleunigenden D-Anteile in den Regelkreis geschaltet sind. Dies mag für Ziviltriebwerke ausreichend sein, für militärische Triebwerke ist jedoch aus naheliegenden Gründen eine wesentlich größere Beschleunigung erforderlich. Dazu können D-Anteile, beispielsweise auf den gemessenen Temperatur- Istwert aufgeschaltet werden, die ein schnelleres "Hochfahren" aus dem Leerlauf oder dem unteren Teillastbereich ermöglichen, und so das Auftreten von unbedingt zu vermeidenden Überschwingern verhindert wird.

Ein derartiges Triebwerk hätte jedoch den Nachteil, daß zwar gut aus unteren Betriebsbereichen beschleunigt würde, jedoch aus Bereichen nahe Vollast ein Kriecheffekt auftreten würde, da durch den aufgeschalteten D-Anteil ein Erreichen des (Temperatur-)Grenzwertes vorgetäuscht wird, obwohl die Temperatur noch darunter liegt.

Die in der EP-A 64 437 offenbarte Regelschaltung dient zur Linearisierung einer Beschleunigungsregelung, also um im gesamten Betriebsbereich eine konstante Kreisverstärkung (Regelgüte) zu erhalten. Dabei wird eine variable Verstärkung (für eine Wellenbeschleunigung) in Abhängigkeit von Augenblickswerten erzeugt.

Hiervon ausgehend ist es Aufgabe der Erfindung, ein Regelverfahren und eine Anordnung zur Durchführung des Regelverfahrens anzugeben, mittels dessen unabhängig vom Anfangswert bei der Triebwerksbeschleunigung einen optimalen Hochlauf der Wellendrehzahl zu erreichen, ohne daß unzulässige Überschreitungen des Turbinentemperatur-Grenzbereiches auftreten.

Erfindungsgemäß wird diese Aufgabe durch die im Patentanspruch 1 oder angegebenen Merkmale gelöst. Vorteilhafte Weiterbildungen der Erfindung ergeben sich aus den Unteransprüchen.

Das erfindungsgemäße Verfahren hat den Vorteil, daß bei Beschleunigung des Triebwerkes vom Leerlauf aus eine längere Beschleunigungsdauer auftritt, und hierdurch der Verstärkungsfaktor bzw. Aufschaltwert für den differenzierten Turbinentemperatur-Istwert größer wird. Dieser vergrößerte Verstärkungsfaktor verhindert ein Überschwingen der Turbinentemperatur. Bei Beschleunigungen aus dem Teillastbereich wird dieser Aufschaltfaktor vorteilhafterweise weniger groß, wodurch der Kriecheffekt vermieden werden kann. Dies führt dazu, daß einerseits die Einschwingvorgänge insbesondere der Turbinentemperatur ohne Überschwinger erfolgen, andererseits von jedem beliebigen Betriebspunkt aus eine schnelle Beschleunigung des Triebwerkes an den Grenzwerten möglich ist. Ferner ergibt sich eine gute Störgrößenunterdrückung bei stationärem Betrieb, weil die geringe differentielle Verstärkung K_{D} einen relativ großen Gradienten des Istwertes zuläßt, wodurch eine Störgröße entsprechend schnell ausgeregelt werden kann.

Der Beschleunigungsstellwert ṅₛ dient dazu, daß signifikante Beschleunigungen von Regeländerungen im stationären Betrieb, also im Kleinsignalverhalten, unterschieden werden können. In letzterem Fall soll keine Änderung der Regelcharakteristik, also keine Änderung der Verstärkung erfolgen, während im Beschleunigungsbetrieb die erfindungsgemäße Änderung der Verstärkung aktiviert werden soll. Bei Annäherung des Istwertes an einen Sollwert nimmt aufgrund der sinkenden Regelabweichung (=Überschußbrennstoff) die Wellenbeschleunigung wieder ab. Unterschreitet diese den Beschleunigungsschwellwert wieder so nimmt die Verstärkung vom zu diesem Zeitpunkt eingestellten Verstärkungsfaktor in Richtung unteren Grenzwert hin ab, bis sie diesen erreicht.

In vorteilhafter Weiterbildung der Erfindung ist die Verstärkung K_{D} des differenzierten Temperaturistwertes nach einer Rampenfunktion zwischen einem unteren Grenzwert K_{D min} und einem oberen Grenzwert K_{D max} eingestellt. Die Rampenfunktion ist vorzugsweise zeitproportional, d. h. der einzustellende Verstärkungsfaktor nimmt linear mit der Zeit bis zum Erreichen des oberen Grenzwertes zu. Ab einem bestimmten Zeitpunkt kann dabei die Rampenfunktion vom zeitproportionalen auf eine Verzögerungsfunktion erster Ordnung umgestellt werden. D. h. der Verstärkungsfaktor läuft nicht linear bis zum oberen Grenzwert, um dann an dieser Stelle einen Knick aufzuweisen, sondern die Verstärkung nähert sich gemäß einer Verzögerungsfunktion 1. Ordnung (PT₁) asymptotisch dem oberen Grenzwert an. Bei der asymptotischen Annäherung erfolgt die zeitabhängige Zunahme der Verstärkung in genügender Entfernung vom oberen Grenzwert mit der gleichen Steigung wie bei der zeitproportionalen Rampenfunktion, so daß bei Bedarf zu einem beliebigen Zeitpunkt vor Erreichen des oberen Grenzwertes von der einen auf die andere Rampenfunktion umgeschaltet werden kann.

Vorteilhafterweise beträgt der Beschleunigungsschwellwert nₛ das 0,2 - 0,8fache der maximal zulässigen Wellenbeschleunigung ṅₘₐₓ, wobei vorzugsweise etwa das 0,5fache von ṅₘₐₓ einzustellen ist. Die genaue Einstellung des Beschleunigungsschwellwertes ist abhängig von den konstruktiven und thermodynamischen Daten des verwendeten Triebwerkes, in der Praxis hat sich der Wert 0,5 als vorteilhaft erwiesen. Die maximal zulässige Beschleunigung nₘₐₓ ist selber abhängig vom Flugzustand, also insbesondere Machzahl, Höhe, Tempteratur etc.

Eine weitere Ausbildung der Erfindung sieht vor, daß der Betrag der Rampenfunktionssteigerung niedriger ist als der Betrag des Rampenfunktionsabfalles. Dabei erfolgt das Hochlaufen vom unteren zum oberen Grenzwert langsamer als das anschließende Herunterlaufen der Verstärkung. Der verglichen mit der Rampenfunktionssteigung relativ steile Rampenfunktionsabfall ist zur Gewährleistung eines überschwingerfreien Einregelns auf den Sollwert erforderlich. Die Rampenfunktionssteigung der Verstärkung ist zwischen 5 und 100 % pro Sekunde vorteilhafterweise einstellbar, wobei der Prozentsatz auf den Anfangswert zum Zeitpunkt des Beschleunigungsbeginnes abgestellt ist. Der Betrag des Rampenfunktionsabfalles beträgt vorzugsweise etwa das 2 - 3fache des Betrages der Rampenfunktionssteigung, wobei die genaue Einstellung des verwendeten Triebwerkes vorzunehmen ist.

In vorteilhafter Weiterbildung der Erfindung beträgt der obere Verstärkungswert K_{D max} das 2 - 5fache des unteren Verstärkungswertes K_{D min}.

Vorteilhafterweise wird als Wellenbeschleunigung n die Beschleunigung einer Gasturbinenhochdruckwelle verwendet, da mit diesem Signal im Anwendungsfall die Beschleunigung des Triebwerkes limitiert wurde. Sollte die Triebwerksbeschleunigung durch ein anderes Signal (z. B. Druck) begrenzt werden, so könnte auch dieses Signal in entsprechender Weise hierzu verwendet werden.
Die Erfindung betrifft ferner eine Anordnung zur Regelung der Brennstoffzufuhr einer Gasturbine in Abhängigkeit zumindest einer Turbinentemperatur und einer Wellenbeschleunigung, bei der ein Temperatur-Istwert mit einem Temperatur-Grenzwert in einem ersten Summierer verglichen wird, und der in einem Differenzierer differenzierte Temperatur-Istwert eines zweiten Summierers in die Regelstrecke geschaltet ist. Bei einer derartigen Anordnung kann der Ausgang des Differenzierers im zweiten Summierer entweder in den Istwert-Zweig vor dem ersten Summierer geschaltet sein, oder mit dem Abweichungssignal hinter dem ersten Summierer zusammengeschaltet sein.

Bei einer derartigen Anordnung wird die der Erfindung zugrunde liegende Aufgabe durch die im Kennzeichnungsteil des Patentanspruchs angegebenen Merkmalen gelöst.

Die mittels dieser Regelanordnung erzielbaren Vorteile entsprechen denen zu den Verfahrensansprüchen oben genannten.

Die Umschaltung des Rampengenerators von der Hochlauffunktion auf die abfallenden Funktion erfolgt über einen binären Eingang, der mit einem Komparator verbunden ist. Als Eingänge des Komparators dienen einerseits die Wellenbeschleunigung n, die mit einem im Triebwerk angebrachten Sensor abgegriffen und dem Komparator zugeführt wird, und andererseits der Beschleunigungsschwellwert ṅₛ, der in einem Speicher festgelegt ist. Ferner weist der Rampengenerator vorteilhafterweise einen Steuereingang auf, wobei abhängig von dessen Eingangszustand die Rampenfunktion entweder zeitproportional ist, oder ein PT₁-Verhalten aufweist. Der Steuereingang ist zu diesem Zweck vorteilhafterweise ebenfalls binär ausgeführt.

Die Erfindung wird nachfolgend anhand der beigefügten Zeichnung weiter erläutert. Dabei zeigt:
- Fig. 1:: eine schematische Darstellung der Regelanordnung bei einem Gasturbinentriebwerk,
- Fig. 2:: ein Blockschaltbild der erfindungsgemäßen Regleranordnung,
- Fig. 3:: ein Funktions-Zeit-Diagramm.

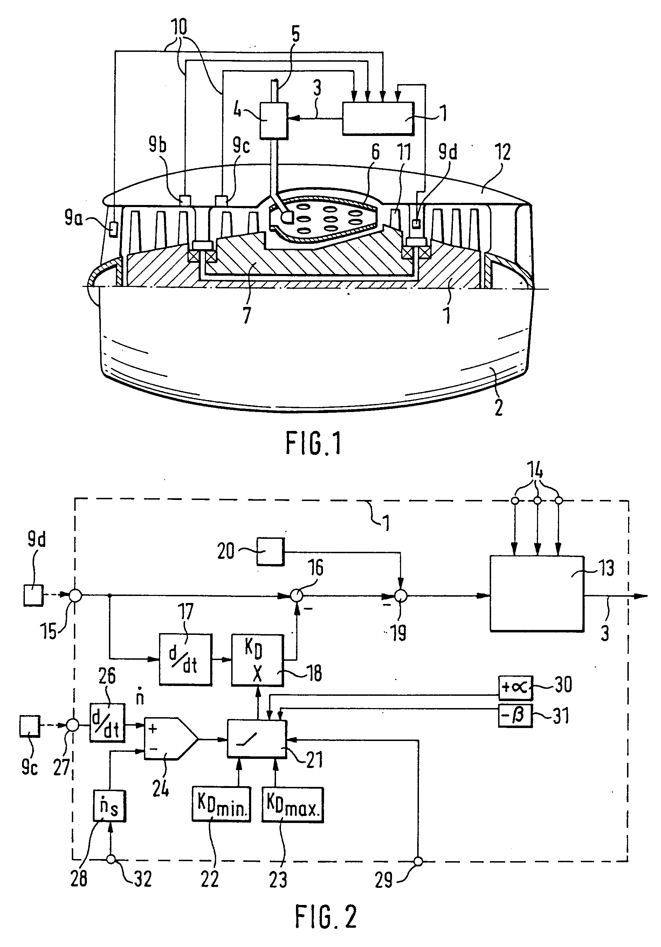

In Fig. 1 ist schematisch dargestellt, wie mittels der Regleranordnung 1 ein Gasturbinentriebwerk 2 geregelt wird. Die Regleranordnung 1 steuert dabei über die Steuerleitung 3 ein Brennstoffventil 4, welches von einem nicht dargestellten Vorratstank und einer Förderpumpe Brennstoff über die Brennstoffleitung 5 in die Brennkammer 6 des Gasturbinentriebwerkes 2 leitet.

Das Gasturbinentriebwerk 2 weist im Wesentlichen einen Hochdruckrotor 7 und einen Niederdruckrotor 8 auf, die jeweils einen Verdichter und eine Turbine aufweisen. Ferner sind an verschiedenen Stellen des Gasturbinentriebwerks 2 Meßsensoren 9a, 9b, 9c, 9d für die Ermittlung von Istwerten der in der Regleranordnung 1 verwendeten Größen vorgesehen. Für die erfindungsgemäße Anordnung ist dabei insbesondere der Meßsensor 9c von Bedeutung, der die Drehzahl und somit auch die Beschleunigung des Hochdruckrotors 7 registriert und der Regleranordnung 1 über die zugehörige Meßleitung 10 zuführt. Ebenfalls von Bedeutung ist der Meßsensor 9d, der die Turbinentemperatur, in diesem Fall zwischen der Hochdruckturbine 11 und der Niederdruckturbine 12 registriert und ebenfalls der Regleranordnung 1 zuführt. Die Meßsonsoren 9a und 9b messen die Eingangsbedingungen des Gasturbinentriebwerkes 2 sowie die Drehzahl und Beschleunigung des Niederdruckrotors 8.

In Fig. 2 ist die Regleranordnung 1 gemäß Fig. 1 innerhalb des gestrichelt angedeuteten Kastens dargestellt, die im Wesentlichen einen Regler 13 umfaßt. Dieser Regler 13 ist vorzugsweise als PID-Mehrgrößenregler für eine Anzahl von Stellgrößen ausgebildet, die über die Eingänge 14 dem Regler 13 zugeführt sind. Diese Eingänge 14 umfassen dabei sowohl Istwerte, die beispielsweise über Sensoren gemäß Fig. 1 zugeführt werden, als auch Sollwerte wie beispielsweise die Gashebelstellung des Flugzeugpiloten. Der Ausgang des Reglers 13 bildet die Steuerleitung 3, über welche das Brennstoffventil 4 gemäß Fig. 1 angesteuert wird. Einer der Eingänge des Reglers 13 bildet der Turbinentemperatur-Eingang 15, der mit dem Meßsensor 9d (Fig. 1) des Gasturbinentriebwerkes 2 verbunden ist. Das an den Turbinentemperatur-Eingang gelangende Temperatur-Istwertsignal gelangt gleichzeitig einerseits auf einen Summierer 16 und einen Differenzierer 17. Das im Differenzierer 17 differenzierte Temperaturistwertsignal wird über einen Multiplizierer 18 auf den invertierenden Eingang des Summierers 16 geleitet. Der Ausgang des Summierers 16 wird auf einen zweiten Summierer 19 zusammen mit dem in einer Speichereinheit 20 gespeicherten Temperatursollwert geleitet. Am Ausgang des zweiten Summierers 19 liegt somit das Abweichungssignal der Turbinentemperatur vor, welches dem Regler 13 zugeführt wird.

Der Multiplizierer 18 wird von dem Rampengenerator 21 angesteuert, wobei abhängig vom Zustand des Rampengenerators eine bestimmte Verstärkung K_{D} des Multiplizierers 18 eingestellt wird. Mit dieser Verstärkung K_{D} wird das auf dem Differenzierer 17 kommende Signal multipliziert, bevor es den ersten Summierer 6 beaufschlagt.

Der Rampengenerator 21 ist mit zwei Speichereinheiten 22, 23 verbunden, in denen der untere Grenzwert K_{D min} und der obere Grenzwert K_{D max} gespeichert sind. Zwischen diesen beiden Grenzwerten bewegt sich die Rampenfunktion des Rampengenerators 21 und somit die eingestellte Verstärkung des Multiplizierers 18. Der Rampengenerator 21 ist mit einem Komparator 24 verbunden, wobei abhängig vom binären Ausgangssignal des Komparators 24 entweder eine aufsteigende Rampenfunktion oder eine abfallende Rampenfunktion auf den Multiplizierer 18 gegeben wird. Der Komparator 24 ist mit einem zweiten Differenzierer 26 verbunden, der über den Eingang 27 mit dem Meßsensor 9c (Fig. 1) verbunden ist. Mittels des Meßsensors 9c wird die Wellendrehzahl des Hochdruckrotors 7 des Gasturbinentriebwerkes 2 (Fig. 1) gemessen und mittels des Differenzierers 26 die Beschleunigung des Hochdruckrotors 7 ermittelt. Im Komparator 24 wird diese Wellenbeschleunigung n mit dem in der Speichereinheit 28 befindlichen Beschleunigungsschwellwert ṅₛ verglichen. Der Beschleunigsschnellwert ṅₛ wird über den Steuereingang 32 abhängig vom Flugzustand eingestellt, und beträgt das 0,3 bis 0,6fache des im betreffenden Flugzustand maximal zulässigen Beschleunigungswertes ṅₘₐₓ. Überschreitet die im Differenzierer 26 ermittelte Beschleunigung ṅ den Beschleunigungsschwellwert ṅₛ, so wird der Rampengenerator 21 veranlaßt, eine aufsteigende Rampenfunktion auf den Multiplizierer 18 zu geben, während bei Unterschreiten des Beschleunigungsschwellwertes ṅₛ eine abfallende Rampenfunktion kommandiert wird.

Der Rampengenerator 21 weist ferner einen Kontursteuereingang 29 auf, der mit einem binären Signal steuerbar ist. Abhängig vom Schaltzustand des Kontursteuereingang 29 wird eine zeitlineare Rampenfunktion oder eine verzögerte Rampenfunktion (PT₁) generiert.

In den Speichereinheiten 30 und 31 sind die Steigungen für die ansteigende und abfallende Rampenfunktion gespeichert, wobei letztere dem Betrag nach größer ist. Diese Steigungen können im Rampengenerator 21 entweder als zeitenvariante lineare Funktionen auf den Multiplizierer 18 ausgegeben werden, oder bei entsprechender Schaltstellung des Funktionswähleingang 29 zu einer Verzögerungsfunktion (PT₁) umgeformt werden.

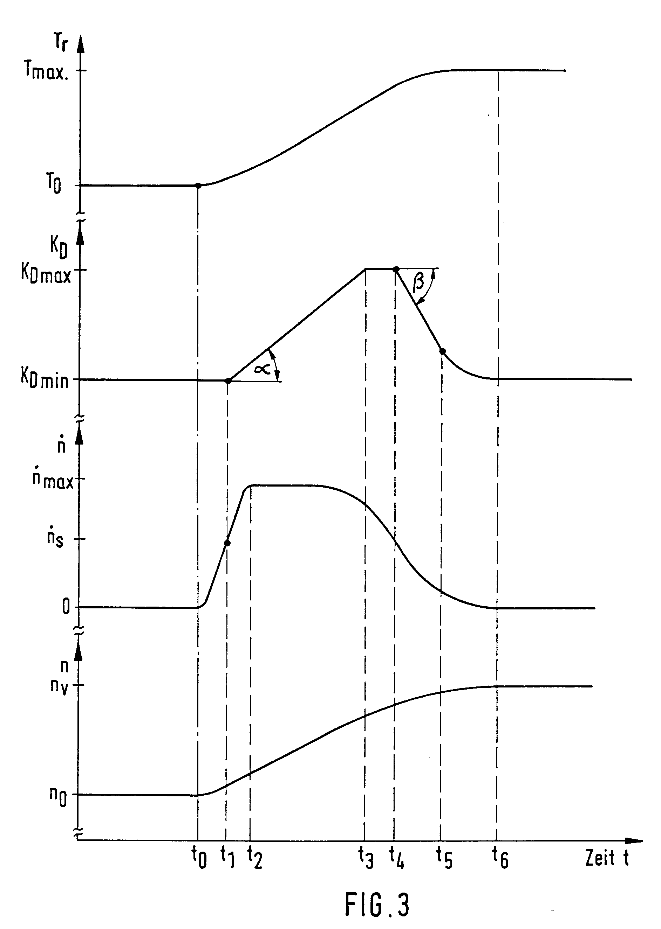

In Fig. 3 ist schematisch der Verlauf der Turbinentemperatur T_{T}, des Verstärkungsfaktors K_{D}, der Wellenbeschleunigung ṅ und der Wellendrehzahl n über der Zeit größenordnungsmäßig aufgetragen.

Bis zu einem Zeitpunkt t₀ befindet sich das Triebwerk in einem stationären Zustand bei Leerlaufdrehzahl n₀. Die Wellenbeschleunigung beträgt dabei 0, der Verstärkungsfaktor K_{D} ist am unteren Grenzwert K_{D min} und die Turbinentemperatur T_{T} steht auf ihrem Leerlaufwert T₀. Zum Zeitpunkt t₀ wird für das Gasturbinenentriebwerk Vollgas kommandiert, d. h. die Wellendrehzahl n sollte schnellstmöglich auf die Vollastdrehzahl nᵥ, und die Turbinentemperatur T_{T} auf die Maximaltemperatur Tₘₐₓ hochgefahren werden, wobei die maximal zulässige Wellenbeschleunigung ṅₘₐₓ nicht überschritten werden darf. Die Wellenbeschleunigung ṅ läuft von 0 in Richtung nₘₐₓ hoch, und überschreitet zum Zeitpunkt t₁ den Wellenbeschleunigungsschwellwert ṅₛ. Zu diesem Zeitpunkt beginnt die Verstärkung K_{D} vom unteren Grenzwert K_{D min} aus mit einer bestimmten Steigung, die durch den Winkelα angedeutet ist, in Richtung oberem Grenzwert K_{D max} hochzulaufen. Zum Zeitpunkt t₂ erreicht die Wellenbeschleunigung ṅ ihren Maximalwert und wird durch nicht näher dargestellte Regelschleifen im Regler 13 (Fig. 2) am Überschreiten dieses Maximalwertes gehindert. Somit läuft die Drehzahl ṅ schnellstmöglich in Richtung Vollastdrehzahl nᵥ hoch.

Zum Zeitpunkt t₃ erreicht der Verstärkungsfaktor K_{D} den oberen Grenzwert K_{D max} und verbleibt anschließend auf diesem Wert. Solange, bis die Wellenbeschleunigung ṅ bei Annäherung der Wellendrehzahl n an den oberen Grenzwert nᵥ wieder unter den Beschleunigungsschwellwert ṅₛ absinkt, was zum Zeitpunkt t₄ geschieht. Ab diesem Zeitpunkt läuft die Verstärkung K_{D} vom oberen Grenzwert mit der negativen Steigung β zurück in Richtung unterem Grenzwert K_{D min} solange bis sie diesen unteren Grenzwert erreicht. Gleichtzeitig nimmt ab diesem Zeitpunkt der Temperaturgradient dT/dt ab.

Zum Zeitpunkt t₅ wird an dem Funktionswähleingang 25 des Rampengenerators 21 (Fig. 2) das binäre Signal umgeschaltet, um von einer zeitproportionalen Rampe auf eine PT₁-Rampe umzuschalten, so daß die Verstärkung K_{D} sich asymptotisch dem unteren Grenzwert K_{D min} nähert. Dieses Umschalten ist nur beispielhaft hier angegeben. Es kann sowohl bei derr aufsteigenden Rampe eine PT₁-Verzögerung eingestellt werden. Genauso können beide Rampen nur Zeitproportional oder beide PT₁-Verhalten aufweisen. Die genaue Wahl der Rampenkontur ist wiederum abhängig von den Parametern der Gasturbine und des Regelkreises.

Im Zeitpunkt t₆ ist der Vollastzustand erreicht, d. h. die Turbinenwelle dreht mit Vollastdrehzahl nᵥ und die Turbinentemperatur beträgt Tₘₐₓ. Wesentlich dabei ist, daß weder die Drehzahl n noch die Turbinentemperatur T_{T} mit Überschwingern auf ihren Maximalwert eingerastet sind.

Zahlenmäßige Werte für die Abszisse oder Ordinate der Fig. 6 lassen sich sinnvollerweise nicht angeben, da diese von den technischen Daten der Gasturbine, der verwendeten Regelglieder der Regleranordnung 1, der verwendeten Meßsensoren 9 und sonstiger technischer Details abhängen.

## Patentansprüche

1. Verfahren zur Regelung der Brennstoffzufuhr einer Gasturbine in Abhängigkeit zumindest einer Turbinentemperatur, deren Istwert erfaßt wird und einer Wellenbeschleunigung, dadurch gekennzeichnet, daß der Temperatur-Istwert mit dem differenzierten Temperatur-Istwert beaufschlagt wird und mit einem Temperatur-Grenzwert verglichen wird, und dessen Ausgangssignal mittels nachfolgender Regelglieder ein Stellsignal bildet, wobei die Verstärkung K_{D} des differenzierten Temperatur-Istwertes T_{I} gleichsinnig abhängig von der Dauer der einen Beschleunigungsschwellwert ṅₛ überschreitenden Wellenbeschleunigung ṅ eingestellt wird.

2. Verfahren nach Anspruch 1, dadurch gekennzeichnet, daß die Verstärkung K_{D} nach einer Rampenfunktion zwischen einem unteren Grenzwert K_{D min} und einem oberen Grenzwert K_{D max} eingestellt wird, die zeitproportional ist, oder eine Verzögerungsfunktion erster Ordnung (PT₁) ist, oder eine Kombination hiervon.

3. Verfahren nach Anspruch 1, dadurch gekennzeichnet, daß der Beschleunigungsschwellwert ṅₛ das 0,2 - 0,8fache der maximal zulässigen Wellenbeschleunigung ṅₘₐₓ beträgt.

4. Verfahren nach Anspruch 3, dadurch gekennzeichnet, daß der Beschleunigungsschwellwert ṅₛ das 0,5fache der maximal zulässigen Wellenbeschleunigung ṅₘₐₓ beträgt.

5. Verfahren nach einem der vorhergehenden Ansprüche, dadurch gekennzeichnet, daß der Betrag der Rampenfunktionssteigung niedriger ist als der Betrag des Rampenfunktionsabfalls.

6. Verfahren nach Anspruch 4, dadurch gekennzeichnet, daß die Rampenfunktionssteigung der Verstärkung K_{D} einstellbar zwischen 5 - 100 % ist.

7. Verfahren nach Anspruch 5 oder 6, dadurch gekennzeichnet, daß der Betrag des Rampenfunktionsabfalls der Verstärkung K_{D} das 2 -3fache des Betrages der Rampenfunktionssteigung ist.

8. Verfahren nach einem der vorhergehenden Ansprüche, dadurch gekennzeichnet, daß der obere Verstärkungswert K_{D max} das 2 - 5fache des unteren Verstärkungswertes K_{D min} beträgt.

9. Verfahren nach einem der vorhergehenden Ansprüche, dadurch gekennzeichnet, daß als Wellenbeschleunigung ṅ die Beschleunigung einer Gasturbinenhochdruckwelle verwendet wird.

10. Anordnung zur Regelung der Brennstoffzufuhr einer Gasturbine in Abhängigkeit zumindest einer Turbinentemperatur und einer Wellenbeschleunigung, bei der ein Temperatur-Istwert mit einem Temperatur-Grenzwert in einem Summierer verglichen wird, und der in einem Differenzierer differenzierte Temperatur-Istwert mittels eines weiteren Summierers in die Regelstrecke geschaltet ist, dadurch gekennzeichnet, daß ein Multiplizierer (18) mit dem Ausgang des Differenzierers (17) gekoppelt ist, und von einem Rampengenerator (21) gesteuert ist, wobei der Rampengenerator (21) ein Rampensignal erzeugt, das zwischen zwei Grenzwerten K_{D min} und K_{D max} liegt und abhängig von einem bipolaren Eingangssignal entweder mit einer positiven Rampenfunktion hochläuft oder mit einer negativen Rampenfunktion abfällt.

11. Anordnung nach Anspruch 10, dadurch gekennzeichnet, daß das bipolare Eingangssignal des Rampengenerators (21) durch einen Komparator (24) gebildet wird, der als Eingänge die Wellenbeschleunigung ṅ und ein Beschleunigungsschwellwert ṅₛ aufweist.

12. Anordnung nach Anspruch 10, dadurch gekennzeichent, daß der Rampengenerator (21) einen Kontursteuereingang (29) aufweist, und abhängig vom Eingangszustand des Kontursteuereingangs (29) entweder eine zeitproportionale lineare Funktion oder eine Verzögerungsfunktion 1. Ordnung (PT₁) erzeugt.

## Claims

1. Process for controlling the fuel supply of a gas turbine in dependence on at least one turbine temperature, of which the actual value is determined, and a shaft acceleration, characterised in that the differentiated actual temperature value is applied to the actual temperature value and the result compared with a temperature limit value to provide an output signal which, by means of subsequent control elements, generates an actuating signal, the amplification K_{D} of the differentiated actual temperature value T_{I} being set to be dependent, in the same sense, on the length of time during which the shaft acceleration value ṅ exceeds an acceleration threshold value ṅ_{S}.

2. Process according to claim 1, characterised in that the amplification K_{D} is set between a lower limit value K_{D min} and an upper limit value K_{D max} by a ramp function which is either time-proportional, or a first order time-delay function (PT₁), or a combination thereof.

3. Process according to claim 1, characterised in that the acceleration threshold value ṅ_{S} amounts to 0.2 to 0.8 times the maximum permitted shaft acceleration ṅₘₐₓ.

4. Process according to claim 3, characterised in that the acceleration threshold value ṅ_{S} amounts to 0.5 times the maximum permitted shaft acceleration ṅₘₐₓ.

5. Process according to any one of the preceding claims, characterised in that the upward gradient of the ramp function is less steep than the downward gradient of the ramp function.

6. Process according to claim 4, characterised in that the upward gradient of the ramp function of the amplification K_{D} can be selected between 5 and 100%.

7. Process according to claim 5 or claim 6, characterised in that the steepness of the downward gradient of the ramp function of the amplification K_{D} is from 2 to 3 times that of the upward gradient of the ramp function.

8. Process according to any one of the preceding claims, characterised in that the upper amplification value K_{D max} is from 2 to 5 times the lower amplification value K_{D min}.

9. Process according to any one of the preceding claims, characterised in that the acceleration of a high pressure shaft of the gas turbine is used as the shaft acceleration ṅ.

10. System for controlling the fuel supply of a gas turbine in dependence on at least one turbine temperature and a shaft acceleration, wherein an actual temperature value is compared with a temperature limit value in an adder and the actual temperature value, differentiated in a differentiator, is fed into the control system by means of a further adder, characterised in that a multiplier (18) is coupled to the output of the differentiator (17) and is controlled by a ramp generator (21), the ramp generator (21) producing a ramp signal that lies between two limits K_{D min} and K_{D max} and, depending on a bipolar input signal, either runs up with a positive ramp function or runs down with a negative ramp function.

11. System according to claim 10, characterised in that the bipolar input signal of the ramp generator (21) is generated by a comparator (24) which has as its inputs the shaft acceleration ṅ and an acceleration threshold value ṅ_{S}.

12. System according to claim 10, characterised in that the ramp generator (21) has a contour control input (29) and generates either a time-proportional linear function or a first order time-delay function (PT₁), dependent on the input state of the contour control input (29).

## Revendications

1. Procédé de régulation de l'alimentation en combustible d'une turbine à gaz en fonction d'au moins une température de la turbine, dont la valeur réelle est mesurée, et de l'accélération de l'arbre, caractérisé en ce que la valeur réelle de la température est associée à la valeur réelle différenciée de la température et comparée à une valeur limite de température, et son signal de sortie forme un signal de réglage au moyen d'organes de régulation ultérieurs, l'amplification K_{D} de la valeur réelle différenciée T_{I} de température étant établie simultanément en fonction de la durée de l'accélération ṅ de l'arbre, ladite accélération excédant une valeur de seuil d'accélération ṅₛ.

2. Procédé selon la revendication 1, caractérisé en ce que l'amplification K_{D} est choisie, selon une fonction de rampe, entre une valeur limite inférieure K_{D min} et une valeur limite supérieure K_{D max}, ladite fonction étant proportionnelle au temps ou étant une fonction de retard de premier ordre (PT₁), ou étant une combinaison de ces deux options.

3. Procédé selon la revendication 1, caractérisé en ce que la valeur de seuil d'accélération ṅₛ est comprise entre 0,2 et 0,8 fois l'accélération maximum autorisée ṅₘₐₓ de l'arbre.

4. Procédé selon la revendication 3, caractérisé en ce que la valeur de seuil d'accélération ṅₛ est égale à 0,5 fois l'accélération maximum autorisée ṅₘₐₓ de l'arbre.

5. Procédé selon l'une des revendications précédentes, caractérisé en ce que la valeur d'élévation de la fonction de rampe est inférieure à la valeur de diminution de la fonction de rampe.

6. Procédé selon la revendication 4, caractérisé en ce que l'élévation de la fonction de rampe de l'amplification K_{D} peut être réglée entre 5 et 100 %.

7. Procédé selon la revendication 5 ou 6, caractérisé en ce que la valeur de diminution de la fonction de rampe de l'amplification K_{D} est égale au double ou au triple de celle de l'élévation de la fonction de rampe.

8. Procédé selon l'une des revendications précédentes, caractérisé en ce que la valeur supérieure d'amplification K_{D max} est comprise entre 2 et 5 fois la valeur inférieure d'amplification K_{D min}.

9. Procédé selon l'une des revendications précédentes, caractérisé en ce qu'on utilise, comme accélération d'arbre ṅ, l'accélération d'un arbre à haute pression de turbine à gaz.

10. Agencement de régulation de l'alimentation en combustible d'une turbine à gaz en fonction d'au moins une température de la turbine et de l'accélération de l'arbre, une valeur réelle de température étant comparée à une valeur limite de température dans un additionneur, et la valeur réelle de température, différenciée dans un différenciateur, étant introduite au moyen d'un autre additionneur dans le circuit de régulation, caractérisé en ce qu'un multiplicateur (18) est relié à la sortie du différenciateur (17) et est commandé par un générateur de rampe (21), le générateur de rampe (21) produisant un signal de rampe qui est compris entre deux valeurs limites K_{D min} et K_{D max} et qui, en fonction d'un signal d'entrée bipolaire, augmente avec une fonction de rampe positive ou diminue avec une fonction de rampe négative.

11. Agencement selon la revendication 10, caractérisé en ce que le signal d'entrée bipolaire du générateur de rampe (21) est formé par un comparateur (24) qui reçoit, comme entrées, l'accélération ṅ de l'arbre et une valeur de seuil d'accélération ṅₛ.

12. Agencement selon la revendication 10, caractérisé en ce que le générateur de rampe (21) comporte une entrée de commande de contour (29) et produit, en fonction de l'état de l'entrée de commande de contour (29), soit une fonction linéaire proportionnelle au temps, soit une fonction de retard de premier ordre (PT₁).
